# EUROPÄISCHE PATENTSCHRIFT

(11) **EP 2 277 243 B1**
(45) Veröffentlichungstag und Bekanntmachung des Hinweises auf die Patenterteilung: **24.04.2013**
(21) Anmeldenummer: 09742112.7
(22) Anmeldetag: 07.05.2009
(51) Int. Cl.: H01R 39/38, H02K 23/02

(54) **ELEKTRISCHE MASCHINE MIT MINDESTENS ZWEI PAAR KOHLEBÜRSTEN**
ELECTRIC MACHINE COMPRISING AT LEAST TWO PAIRS OF CARBON BRUSHES
MACHINE ÉLECTRIQUE COMPRENANT AU MOINS DEUX PAIRES DE BALAIS DE CHARBON

(30) Priorität: 09.05.2008 DE 102008001699
(43) Veröffentlichungstag der Anmeldung: 26.01.2011
(73) Patentinhaber: Robert Bosch GmbH, 70442 Stuttgart (DE)
(72) Erfinder: BAYER, Michael, 71636 Ludwigsburg (DE); GERSCHWITZ, Walter, 71297 Moensheim (DE)
(86) Internationale Anmeldenummer: PCT/EP2009/055517
(87) Internationale Veröffentlichungsnummer: WO 2009/135894

(56) Entgegenhaltungen:
- US-A1- 2004 104 639
- US-A1- 2004 145 268
- US-A1- 2007 007 846

## Beschreibung

Die Erfindung betrifft eine elektrische Maschine mit mindestens zwei Paaren von Kohlebürsten, bestehend aus einer Plus- und einer Minus-Kohlebürste zur Stromversorgung des Läufers der Maschine nach der Gattung des Patentanspruchs 1.

### Stand der Technik

Bei den bekannten so genannten Kommutatormaschinen werden die Wicklungen des Läufers über einen Kommutator von stationär angeordneten Kohlebürsten mit Strom versorgt. Je nach Einsatz der elektrischen Maschine werden dabei die Kohlebürsten im Betrieb mehr oder weniger stark an ihrer Lauffläche auf dem Kommutator dem Verschleiß ausgesetzt. Besonders hohen Beanspruchungen unterliegen dabei Gleichstrommotoren, die zum Starten von Brennkraftmaschinen zum Einsatz kommen. Die Kohlebürsten bestehen dabei zumeist aus einem Sinterwerkstoff mit hauptsächlich Kupfer- und Graphitanteilen. Die Startermotoren sind dabei typischerweise jeweils für einen kurzzeitigen Betrieb mit einer Lebensdauer von etwa 30 000 bis 60 000 Schaltzyklen ausgelegt.

US 2007/007846 A1 beschreibt eine elektrische Maschine nach der Präambel des Anspruchs 1.

Beim Einsatz von Startermotoren in Kraftfahrzeugen mit einer Start-Stopp-Automatik sind dagegen aufgrund der häufigen Start-Stopp-Vorgänge deutlich höhere Schaltzyklen erforderlich. Dazu ist es wichtig, dass alle Kohlebürsten der Maschine eine möglichst gleichgroße und gleichmäßige Belastung aufweisen. Bei den bisher zum Einsatz kommenden Startermotoren werden die Kohlebürsten mit einem äquidistanten Winkelabstand am Umfang des Kommutators angeordnet, der bei einer sechspoligen Maschine 60° beträgt. Zur Verringerung der Drehmomentwelligkeit wird für den Kommutator des Startermotors eine Lamellenzahl gewählt, die nicht durch die Polzahl glatt teilbar ist. So werden zum Beispiel für eine sechspolige Maschine Kommutatoren mit 23 oder 28 Lamellen eingesetzt. Hierbei kommt es zu einer unterschiedlichen Belastung für die Plus- und Minus-Bürsten, da die Bürstenpaare drehrichtungsabhängig unterschiedliche Positionen beim Auflaufen und Ablaufen auf den Lamellen einnehmen. Dieser Unterschied bewirkt, dass für die Bürstenpaare beziehungsweise für einzelne Kohlebürsten ein unterschiedliches Lastprofil entsteht, indem drehrichtungsabhängig bestimmte Kohlebürsten beim Auflaufen auf eine Lamelle beziehungsweise beim Ablaufen von einer Lamelle mit einer unterschiedlichen Strombelastung gegenüber der anderen Kohlebürste des Bürstenpaares beaufschlagt ist. Außerdem entstehen dabei an den einzelnen Kohlebürsten deutlich höhere Belastungsspitzen. Folglich altem beziehungsweise verschleißen die Kohlebürsten unterschiedlich stark, so dass die erreichbare Lebensdauer der Maschine wegen des stärkeren Verschleißes einzelner Kohlebürsten in nachteiliger Weise vermindert ist. Die Kohlebürsten der einzelnen Paare sind dabei jeweils um 180° versetzt.

Zur Erhöhung der Lebensdauer der elektrischen Maschine wird dabei ein möglichst geringer und gleichmäßiger Verschleiß an allen Kohlebürsten durch eine optimale Verteilung der Strombelastung und der Belastungsspitzen an den Kohlebürsten angestrebt. Hierzu ist bereits vorgeschlagen worden, dass bei mindestens einem Bürstenpaar der Maschine die Plus- und Minus-Bürste sich in einem Winkel gegenüberstehen, der von 180° abweicht. Mit einer derartigen asymmetrischen Anordnung der Kohlebürsten lässt sich durch die Lamellen-Überdeckung der Kohlebürsten, die im Normalfall bei einer bis eineinhalb Lamellen liegt, eine optimale Aufteilung der elektrischen Belastung und der Lastspitzen an den Kohlebürsten erzielen. Da der Versatz einzelner Kohlebürsten aus der symmetrischen Position je nach Laufrichtung des Kommutators für eine optimale Kommutierung unterschiedlich ist, müssen für einen Linkslauf andere Anordnungen gewählt werden als bei einem Rechtslauf. Außerdem ergeben sich je nach Lamellenzahl unterschiedlich große asymmetrische Anordnungen einzelner Kohlebürsten. Da die Kohlebürsten in Bürstenfassungen aufgenommen sind, die in bekannter Weise mit einer Aufnahme an einer fest montierten Bürstenplatte eingehängt werden, ist es von Nachteil, wenn zur Erzielung der erforderlichen asymmetrischen Anordnung einzelner Kohlebürsten eine Vielzahl verschiedener Bürstenplatten und Bürstenfassungen benötigt werden.

Mit der vorliegenden Erfindung wird angestrebt, zur Erzielung einer asymmetrischen Anordnung einzelner Kohlebürsten die Teilevielfalt möglichst gering zu halten.

### Offenbarung der Erfindung

Eine elektrische Maschine mit den kennzeichnenden Merkmalen des Anspruchs 1 hat den Vorteil, dass mit einer einheitlichen Bürstenplatte eine drehrichtungsabhängige asymmetrische Anordnung einzelner Kohlebürsten für beide Drehrichtungen realisierbar ist, eine Variation von Bürstenplatten für symmetrische und asymmetrische Anordnungen von Kohlebürsten für einen Linkslauf oder Rechtslauf ist ebenfalls nicht erforderlich. Diese Lösung hat den weiteren Vorteil, dass lediglich die asymmetrisch anzuordnende Kohlebürste ein entsprechend modifiziertes Aufnahmeteil an der Bürstenfassung benötigt, welches an der symmetrisch angeordneten Aufnahme der Bürstenplatte einsetzbar ist. Je nach Drehrichtung des Läufers ist dabei das Aufnahmeteil aus der Mitte der Bürstenfassung um einen Winkel α nach rechts oder links versetzt. Dabei kann unter Verwendung von Bürstenfassungen aus Kunststoff das Grundwerkzeug für die Herstellung der Bürstenfassung beibehalten werden. Für die verschiedenen, drehrichtungsabhängigen Fassungen müsste dann nur das Gegenstück des Werkzeugs angepasst werden, welches die Position des Aufnahmeteils an der Rückseite der Bürstenfassung festlegt.

Durch die in den Unteransprüchen aufgeführten Maßnahmen ergeben sich vorteilhafte Ausgestaltungen und Weiterbildungen der im Patentanspruch 1 angegebenen Merkmale.

Dabei wird in einfachster Weise bei einer Kommutatormaschine mit zwei Bürstenpaaren nur an einer Bürstefassung das Aufnahmeteil seitlich zur Mitte versetzt angeordnet. Alternativ dazu ist es möglich, an jeder Plus- oder Minus-Kohlebürste der Bürstenpaare das Aufnahmeteil der Bürstenfassung zu versetzten. Des Weiteren ist es zweckmäßig, in Abhängigkeit von der Lamellenzahl des Kommutators das Aufnahmeteil um einen mehr oder weniger großen Winkel a aus der Mitte der Bürstenfassung versetzt anzuordnen. Im einfachsten Fall ist dabei das Aufnahmeteil an der Bürstenplatte als Nut und das dazu passende Aufnahmeteil an der Bürstenfassung als Rippe ausgebildet, wobei Nut und Rippe der Aufnahme radial zur Läuferachse ausgerichtet sind. Eine besonders vorteilhafte und einfache Aufnahme der Bürstenfassungen an der Bürstenplatte wird dadurch realisiert, dass die Nut zum Innenumfang der Bürstenplatte offen ist und dass die Rippe an der Rückseite der aus Kunststoff hergestellten Bürstenfassung angeordnet ist und mit einem schuhförmigen flachen Vorsprung hinter die Bürstenplatte greift. In Anwendung der Erfindung bei einem sechspoligen Startermotor für Brennkraftmaschinen beträgt der auf die Läuferachse bezogene Winkel α, um den das Aufnahmeteil der Bürstenfassung aus ihrer Symmetrieachse versetzt ist, 2° entgegen der Drehrichtung des Läufers.

Im Idealfall ist bei einer sechspoligen Kommutatormaschine mit vier Kohlebürsten nur eine der beiden Minus-Kohlebürsten mit einer Bürstenfassung ausgestattet, die ein versetztes Aufnahmeteil hat. Bei einer sechspoligen Kommutatormaschine mit sechs Kohlebürsten sind in idealer Weise alle drei Minus-Kohlebürsten mit Bürstenfassungen ausgestattet, die jeweils ein versetztes Aufnahmeteil haben.

### Kurze Beschreibung der Zeichnungen

Die Erfindung wird im Folgenden beispielhaft anhand der Figuren näher erläutert. Es zeigen:
Figur 1 den Querschnitt durch einen sechspoligen Startermotor mit zwei Bürstenpaaren,
Figur 2 eine Bürstenfassung mit einem Aufnahmeteil und einen Ausbruch einer Bürstenplatte mit einer Aufnahme zum Einsetzten der Bürstenfassung,
Figur 3 zeigt die Rückseite der Bürstenfassung mit symmetrischer Anordnung des Aufnahmeteils,
Figur 4 zeigt eine Bürstenfassung mit einem asymmetrisch angeordneten Aufnahmeteil,
Figur 5 zeigt als weiteres Ausfiihrungsbeispiel eine schräg gestellte Bürstenfassung mit asymmetrischer Anordnung des Aufnahmeteils,
Figur 6 zeigt in schematischer Darstellung einen Kommutator mit einer Bürstenplatte und vier Kohlebürsten, von denen eine asymmetrisch angeordnet ist und
Figur 7 zeigt als weiteres Ausführungsbeispiel in schematischer Darstellung einen Kommutator und eine Bürstenplatte mit sechs Kohlebürsten, von denen die drei Minus-Kohlebürsten asymmetrisch angeordnet sind.

### Ausführungsformen der Erfindung

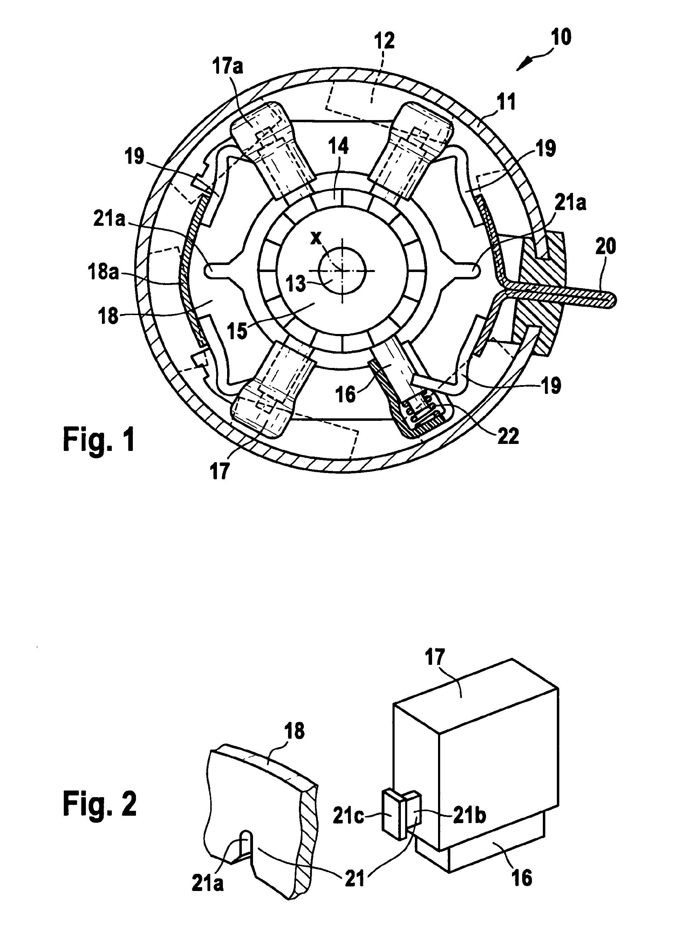

In Figur 1 ist eine elektrische Kommutatormaschine im Kommutatorbereich im Querschnitt dargestellt, die als Startermotor für Brennkraftmaschinen in Kraftfahrzeugen mit einer Start-Stopp-Automatik eingesetzt wird. Der mit 10 bezeichnete Startermotor hat ein stationäres Polgehäuse 11, in dessen vorderen Teil am Innenumfang sechs gestrichelt angedeutete Magnetpole 12 angeordnet sind, die mit einem auf einer Läuferwelle 13 befestigten nicht erkennbaren Läufer zusammenwirken. Die Läuferwicklungen werden über Lamellen 14 eines am hinteren Wellenende befestigten Kommutators 15 elektrisch versorgt, die mit vier Kohlebürsten 16 zusammenwirken, welche über Bürstenfassungen 17 axial verschiebbar an einer Bürstenplatte 18 befestigt sind. Die metallische Bürstenplatte 18 ist am hinteren Ende der Maschine befestigt und über das Polgehäuse 11 auf Masse gelegt. Die Kohlebürsten 16 bilden zwei Bürstenpaare aus je einer Plus- und einer Minus-Kohlebürste. Die beiden Plus-Kohlebürsten sind dabei über je eine Anschlusslitze 19 mit einem durch das Polgehäuse 11 nach außen hindurch geführten Steckanschluss 20 kontaktiert. Die Anschlusslitzen 19 der beiden Minus-Kohlebürsten sind dagegen mit einer Lasche 18a der Bürstenplatte 18 verschweißt und damit auf Masse gelegt. Die Kohlebürsten 16 sind jeweils mit ihren Bürstenfedem 22 in ihrer Bürstenfassung 17, 17a axial verschiebbar aufgenommen.

In Figur 2 ist dargestellt, dass die Bürstenfassungen 17 an der Bürstenplatte 18 mittels einer Aufnahme 21 montiert sind. Dort ist in raumbildlicher Darstellung erkennbar, dass das Aufnahmeteil 21a an der Bürstenplatte 18 als Nut ausgebildet ist, die zum Innenumfang der Bürstenplatte 18 offen ist. Als Gegenstück ist an der Rückseite der aus Kunststoff hergestellten Bürstenfassung 17 das Aufnahmeteil 21b als Rippe ausgebildet, welche in die Nut 21 a der Bürstenplatte einzuschieben ist. Dabei greift ein flacher schuhförmiger Vorsprung 21c jeweils hinter die Bürstenplatte 18. Nut 21a und Rippe 21b der Aufnahme 21 sind dabei jeweils radial zur Läuferachse x ausgerichtet. Die Nuten 21a sind an der Bürstenplatte 18 symmetrisch um jeweils 60° verteilt und liegen sich paarweise diametral um 180° versetzt gegenüber.

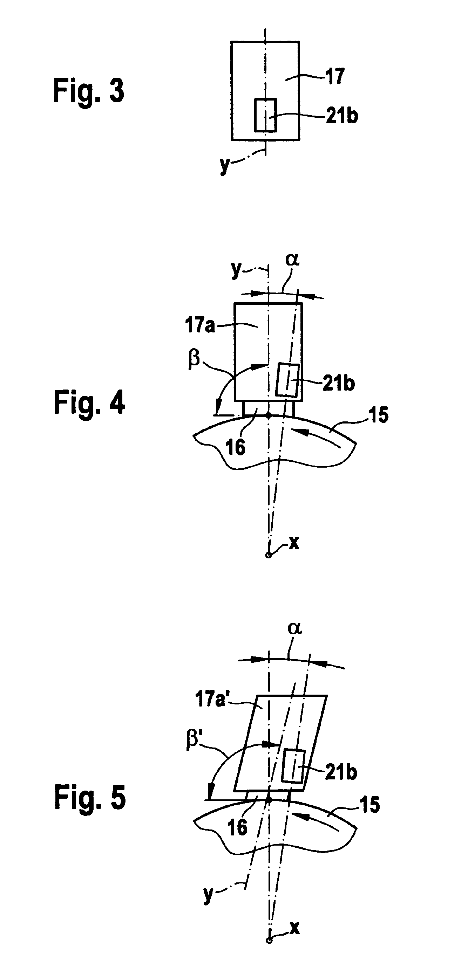

Während drei Bürstenfassungen 17 auf ihrer Rückseite mit einem Aufnahmeteil 21b versehen sind, welches gemäß Figur 3 senkrecht in der Mitte der Bürstenfassung 17 auf ihrer Symmetrieachse y angeordnet ist, ist zur Erzielung einer asymmetrischen Anordnung der vierten Kohlebürste die Aufnahme 21b der Bürstenfassung 17a gemäß Figur 4 um einen auf die Läuferachse x bezogenen Winkel α aus der Mitte der Symmetrieachse y der Bürstenfassung 17a versetzt. Die Kohlebürste 16 mit der Bürstenfassung 17a ist dabei mit einem Winkel β von 90° senkrecht zur Oberfläche des Kommutators 15 ausgerichtet. In Abhängigkeit von der Drehrichtung der Maschine ist das Aufnahmeteil 21 b an der Bürstenfassung 17a nach links oder rechts versetzt anzuordnen. Gemäß Figur 4 ist dabei das Aufnahmeteil 21b gegen die Drehrichtung des Kommutators 15 um den Winkel α nach rechts versetzt.

Figur 5 zeigt in schematischer Darstellung eine zur Kommutatordrehung schräg gestellte Bürstenanordnung. Dort bildet die Symmetrieachse y der Bürstenfassung 17a' zur Lamellenoberfläche des Kommutators 15 einen Winkel β' von über 90°. Auch hier wird das Aufnahmeteil 21b der einen asymmetrisch anzuordnenden Bürstenfassung 17a' um den auf die Läuferachse x bezogenen Winkel α aus der Mitte der Bürstenfassung 17a entgegen der Drehrichtung der Maschine versetzt und dabei radial zur Läuferachse x ausgerichtet.

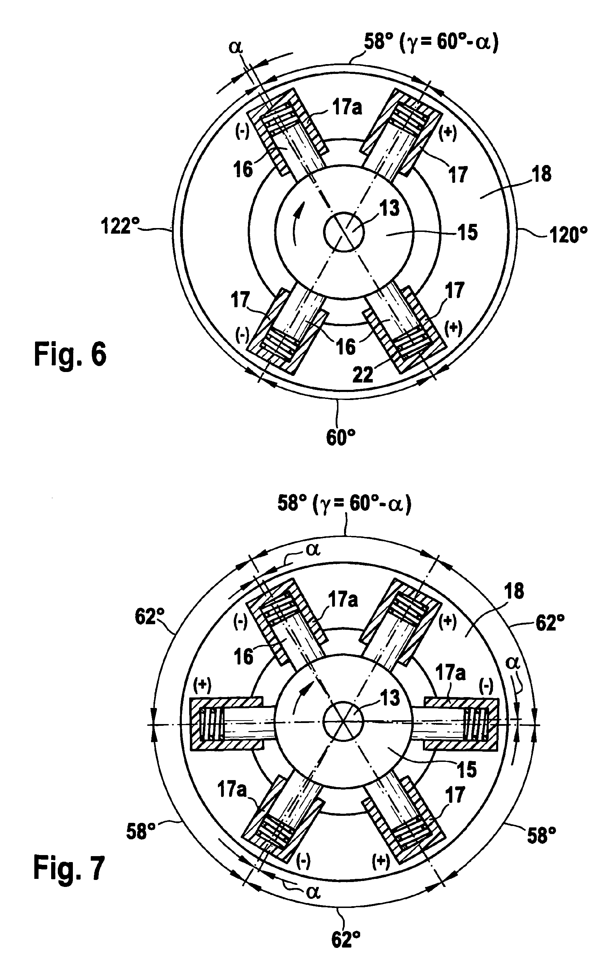

Figur 6 zeigt in schematischer Darstellung bei einer sechspoligen Kommutatormaschine die Anordnung von vier Kohlebürsten 16 auf ihrer Bürstenplatte 18. Dabei hat nur eine der beiden Minus-Kohlebürsten eine Bürstenfassung 17a mit einem um den Winkel α aus der Mitte der Bürstenfassung 17a versetzten Aufnahmeteil 21b. In Abhängigkeit von der Lamellenzahl des Kommutators 15 muss das betreffende Aufnahmeteil mit einem mehr oder weniger großen Winkel α aus der Mitte der Bürstenfassung 17a versetzt werden. Im vorliegenden Ausführungsbeispiel ist bei einem dem Kommutator 15 mit achtundzwanzig Lamellen der Winkel α = 2°. Damit beträgt der Winkel zur nachfolgenden Plus-Kohlebürste γ = 60° - α = 58°. Der Winkel zur vorherigen Minus-Kohlebürste 16 beträgt demzufolge 122°. Bei einem Kommutator mit beispielsweise dreiundzwanzig Lamellen liegt bei einer sechspoligen Kommutatormaschine der Winkel α im Bereich von 2° bis 3°.

In Figur 7 ist als weiteres Ausführungsbeispiel in schematischer Darstellung eine sechspolige Kommutatormaschine mit sechs Kohlebürsten 16 dargestellt, bei der alle drei Minus-Kohlebürsten eine Bürstenfassung 17a mit um den Winkel α versetztem Aufnahmeteil 21b haben. Dadurch ergibt sich hier bei allen drei Minus-Kohlebürsten 116 zu ihrer in Drehrichtung des Kommutators 15 jeweils nachfolgende Kohlebürste 16 ein Winkel γ = 60° - α. Bei einem Winkel α = 2° beträgt somit der Winkel γ = 58°. Zur jeweils vorhergehenden Plus-Kohlebürste 16 beträgt demzufolge der Winkel jeweils 62°.

Die vorliegende Erfindung ist nicht auf die dargestellten Ausführungsbeispiele beschränkt. Alternativ können zum Ausführungsbeispiel nach Figur 6 auch beide Minus-Kohlebürsten in einer Bürstenfassung 17a mit versetztem Aufnahmeteil angeordnet werden. Ebenso ist es möglich, im Ausführungsbeispiel nach Figur 7 nur eine oder zwei der drei Minus-Kohlebürsten 16 in einer Bürstenfassung 17a mit versetztem Aufnahmeteil 21b anzuordnen. Ebenso lässt sich das Lösungsprinzip auch bei vierpoligen, achtpoligen oder zwölfpoligen Kommutatormaschinen realisieren, sofern deren Lamellenzahl durch die Polzahl nicht glatt teilbar ist. Außerdem können im Rahmen der Erfindung auch die Aufnahmen zwischen Bürstenfassungen und Bürstenplatte konstruktiv anders aufgebaut sein. Wesentlich ist jedoch, das zur Vermeidung einer unnötigen Teilevielfalt die Bürstenplatte 18 unabhängig von der Drehrichtung der Maschine und der Lamellenzahl des Kommutators 15 eine einheitliche symmetrische Anordnung der Aufnahmeteile 21 a für Kohlebürsten 16 aufweist und dass lediglich einzelne Bürstenfassungen modifiziert werden, indem hier das Aufnahmeteil 21b aus der Mitte in einem mehr oder weniger großen Winkel α in Abhängigkeit von der Drehrichtung der Maschine nach rechts oder links versetzt wird. Im einfachsten Fall kann eine Befestigung der Bürstenfassungen über die lose Aufnahme beziehungsweise den Sitz der Bürstenfassungen in der ortsfesten Bürstenplatte erfolgen, indem deren Fixierung über die Bürstenfeder, die Kohlebürste und den Kommutator stattfindet. Es sind aber auch andere, zum Beispiel genietete Verbindungen von Bürstenfassungen auf der Bürstenplatte denkbar. Auch in solchen Fällen muss zur Erzielung einer asymmetrischen Bürstenanordnung die Nietaufnahme an der Bürstenfassung um den Winkel α aus der Mitte der Bürstenfassung heraus versetzt werden.

## Patentansprüche

1. Elektrische Maschine (10) mit mindestens zwei Paaren von Kohlebürsten (16) aus einer Plus- und einer Minus-Kohlebürste, die zur Stromversorgung des Läufers mit einem Kommutator (15) zusammenwirken, wobei die sich am Kommutator gegenüberliegenden Kohlebürsten der Paare jeweils mit ihrer Bürstenfassung (17) an einer Bürstenplatte (18) mittels einer Aufnahme (21) montiert sind, die aus je einem Aufnahmeteil (21a) an der Bürstenplatte (18) und (21b) an der Bürstenfassung (17a) besteht und wobei die Aufnahmen an der Bürstenplatte sich um 180° gegenüberliegen, **dadurch gekennzeichnet, dass** an mindestens einer Bürstenfassung (17a) zur Erzielung einer asymmetrischen Anordnung der Kohlebürste (16) das Aufnahmeteil (21b) um einen auf die Läuferachse (x) bezogenen Winkel (a) aus der Mitte, insbesondere der Symmetrieachse (y) der Bürstenfassung (17a) versetzt ist und wobei an den übrigen Bürstenfassungen (17) das Aufnahmeteil (21b) auf deren Symmetrieachse (y) angeordnet ist.

2. Elektrische Maschine nach Anspruch 1, **dadurch gekennzeichnet, dass** an höchstens jeder Plus- oder Minus-Kohlebürste der Bürstenpaare das Aufnahmeteil (21b) der Bürstenfassung (17a) versetzt ist.

3. Elektrische Maschine nach Anspruch 1 oder 2, **dadurch gekennzeichnet, dass** in Abhängigkeit von der Drehrichtung der Maschine (10) das Aufnahmeteil (21b) an der Bürstenfassung (17a) nach links oder rechts versetzt ist.

4. Elektrische Maschine nach einem der vorherigen Ansprüche, **dadurch gekennzeichnet, dass** in Abhängigkeit von einer durch die Polzahl der Maschine nicht glatt teilbaren Lamellenzahl des Kommutators (15) das Aufnahmeteil (21b) um einen mehr oder weniger großen Winkel (a) aus der Mitte der Bürstenfassung (17a) versetzt ist.

5. Elektrische Maschine nach einem der vorherigen Ansprüche, **dadurch gekennzeichnet, dass** das Aufnahmeteil (21 a) an der Bürstenplatte (18) als Nut und das Aufnahmeteil (21b) an der Bürstenfassung (17a) als Rippe ausgebildet ist.

6. Elektrische Maschine nach Anspruch 5, **dadurch gekennzeichnet, dass** Nut (21 a) und Rippe (21b) der Aufnahme (21) radial zur Läuferachse (x) ausgerichtet sind.

7. Elektrische Maschine nach Anspruch 6, **dadurch gekennzeichnet, dass** die Nut (21a) zum Innenumfang der Bürstenplatte (18) offen ist und dass die Rippe (21b) an der Rückseite der aus Kunststoffhergestellten Bürstenfassung (17a) angeordnet ist und mit einem flachen schuhförmigen Vorsprung (21c) hinter die Bürstenplatte (18) greift.

8. Elektrische Maschine nach einem der vorherigen Ansprüche, **dadurch gekennzeichnet, dass** bei einer sechspoligen Kommutatormaschine (10) mit vier Kohlebürsten (16) nur eine der beiden Minus-Kohlebürsten eine Bürstenfassung (17a) mit versetztem Aufnahmeteil (21b) hat.

9. Elektrische Maschine nach einem der Ansprüche 1 bis 10, **dadurch gekennzeichnet, dass** bei einer sechspoligen Kommutatormaschine (10) mit sechs Kohlebürsten (16) alle drei Minus-Kohlebürsten eine Bürstenfassung (17a) mit versetztem Aufnahmeteil (21b) haben.

10. Elektrische Maschine nach einem der vorherigen Ansprüche, **dadurch gekennzeichnet, dass** bei einem sechspoligen Startermotor (10) für Brennkraftmaschinen und einer durch die Polzahl der Maschine nicht glatt teilbaren Lamellenzahl der Winkel (α) entgegen der Drehrichtung des Läufers 2° bis 3° beträgt.

## Claims

1. Electrical machine (10) having at least two pairs of carbon brushes (16) comprising a positive and a negative carbon brush which interact with a commutator (15) in order to supply power to the rotor, wherein the carbon brushes of the pairs, which carbon brushes are situated opposite one another on the commutator, are each fitted by way of their brush holder (17) to a brush plate (18) by means of a holding means (21) which consists of in each case a holding part (21a) on the brush plate (18) and a holding part (21b) on the brush holder (17a), and wherein the holding means on the brush plate are situated opposite one another through 180°, **characterized in that**, in at least one brush holder (17a), the holding part (21b) is offset through an angle (α), in relation to the rotor axis (x), from the centre, in particular the axis (y) of symmetry of the brush holder (17a), in order to achieve an asymmetrical arrangement of the carbon brush (16), and wherein, on the other brush holders (17), the holding part (21b) is arranged on the axis (y) of symmetry of the said other brush holders.

2. Electrical machine according to Claim 1, **characterized in that** the holding part (21b) of the brush holder (17a) is offset on at most each positive or negative carbon brush of the pairs of brushes.

3. Electrical machine according to Claim 1 or 2, **characterized in that** the holding part (21b) is offset to the left or right on the brush holder (17a) depending on the direction of rotation of the machine (10).

4. Electrical machine according to one of the preceding claims, **characterized in that** the holding part (21b) is offset from the centre of the brush holder (17a) through a more or less large angle (α) depending on a number of laminations of the commutator (15) which cannot be evenly divided by the number of poles of the machine.

5. Electrical machine according to one of the preceding claims, **characterized in that** the holding part (21a) on the brush plate (18) is in the form of a groove and the holding part (21b) on the brush holder (17a) is in the form of a rib.

6. Electrical machine according to Claim 5, **characterized in that** the groove (21a) and the rib (21b) of the holding means (21) are oriented radially in relation to the rotor axis (x).

7. Electrical machine according to Claim 6, **characterized in that** the groove (21a) is open in the direction of the inner circumference of the brush plate (18), and **in that** the rib (21b) is arranged on the rear face of the brush holder (17a), which is produced from plastic, and engages behind the brush plate (18) by way of a flat shoe-like projection (21c).

8. Electrical machine according to one of the preceding claims, **characterized in that**, in the case of a six-pole commutator machine (10) with four carbon brushes (16), only one of the two negative carbon brushes has a brush holder (17a) with an offset holding part (21b).

9. Electrical machine according to one of Claims 1 to 10, **characterized in that**, in the case of a six-pole commutator machine (10) with six carbon brushes (16), all three negative carbon brushes have a brush holder (17a) with an offset holding part (21b).

10. Electrical machine according to one of the preceding claims, **characterized in that**, in the case of a six-pole starter motor (10) for internal combustion engines and a number of laminations which cannot be evenly divided by the number of poles of the machine, the angle (α) counter to the direction of rotation of the rotor is 2° to 3°.

## Revendications

1. Machine électrique (10) présentant au moins deux paires de balais (16) en charbon, constituées d'un balai positif en charbon et d'un balai négatif en charbon qui coopèrent avec un commutateur (15) pour alimenter l'induit en courant,
les balais en charbon de la paire situés face au commutateur étant tous deux montés par leur monture de balai (17) sur une plaque (18) à balais au moyen d'un logement (21),
chacun de ces logements étant constitué d'une partie de logement (21a) prévue sur la plaque (18) à balais et d'une partie de logement (21b) prévue sur la monture (17a) de balai, les logements étant orientés à 180° l'un de l'autre sur la plaque à balais,
**caractérisée en ce que**
pour obtenir un agencement asymétrique des balais (16) en charbon, la partie de logement (21b) d'au moins une monture (17a) de balai est décalée par rapport au centre et en particulier par rapport à l'axe de symétrie (y) de la monture (17a) de balai d'un angle (α) par rapport à l'axe (x) de l'induit et
**en ce que** la partie de logement (21b) des autres montures (17) de balai, est disposée sur leur axe de symétrie (y).

2. Machine électrique selon la revendication 1, **caractérisée en ce que** la partie de logement (21b) de la monture (17a) de balai est décalée sur au plus le balai positif en charbon ou le balai négatif en charbon de la paire de balais.

3. Machine électrique selon les revendications 1 ou 2, **caractérisée en ce que** la partie de logement (21b) de la monture (17a) de balai est décalée vers la gauche ou vers la droite en fonction du sens de rotation de la machine (10).

4. Machine électrique selon l'une des revendications précédentes, **caractérisée en ce que** la partie de logement (21b) est décalée du milieu de la monture (17a) de balai d'un angle (α) plus ou moins grand selon que le nombre de lamelles du commutateur (15) est ou non divisible par le nombre des pôles de la machine.

5. Machine électrique selon l'une des revendications précédentes, **caractérisée en ce que** la pièce de logement (21a) prévue sur la plaque (18) à balais est configurée sous la forme d'une rainure et **en ce que** la partie de logement (21b) prévue sur la monture (17a) de balai est configurée sous la forme d'une nervure.

6. Machine électrique selon la revendication 5, **caractérisée en ce que** la rainure (21a) et la nervure (21b) du logement (21) sont orientées radialement par rapport à l'axe (x) de l'induit.

7. Machine électrique selon la revendication 6, **caractérisée en ce que** la rainure (21a) est ouverte sur la périphérie intérieure de la plaque (18) à balais et **en ce que** la nervure (21b) est disposée sur le côté arrière de la monture (17a) de balai réalisée en matière synthétique et s'engage par une saillie (21c) en forme de sabot plat à l'arrière de la plaque (18) à balais.

8. Machine électrique selon l'une des revendications précédentes, **caractérisée en ce que** lorsque la machine (10) est à commutateur, six pôles et quatre balais (16) en charbon, seuls des deux balais négatifs en charbon possèdent une monture (17a) de balai dont la partie de logement (21b) est décalée.

9. Machine électrique selon l'une des revendications 1 à 10, **caractérisée en ce que** lorsque la machine (10) est à commutateur, six pôles et six balais (16) en charbon, les trois balais négatifs en charbon possèdent une monture (17a) de balai dont la partie de logement (21b) est décalée.

10. Machine électrique selon l'une des revendications précédentes, **caractérisée en ce que** lorsque le moteur (10) de démarreur est à six pôles et est prévu pour moteurs à combustion interne et lorsque le nombre de lamelles n'est pas divisible par le nombre de pôles de la machine, l'angle (α) est de 2° à 3° dans le sens opposé au sens de rotation de l'induit.
